# EUROPEAN PATENT SPECIFICATION

(11) **EP 4 399 456 B1**
(45) Date of publication and mention of the grant of the patent: **13.05.2026**
(21) Application number: 22777340.5
(22) Date of filing: 07.09.2022
(51) Int. Cl.: F24S 25/61, F24S 25/63, F24S 25/00, H02S 10/40, H02S 20/30, B65G 1/02

(54) **CONTAINERIZED MODULE CONFIGURED TO SUPPLY ELECTRICAL ENERGY AND OPERATION METHOD THEREOF**
ZUR BEREITSTELLUNG VON ELEKTRISCHER ENERGIE KONFIGURIERTES CONTAINERMODUL UND BETRIEBSVERFAHREN DAFÜR
MODULE CONTENEURISÉ CONFIGURÉ POUR FOURNIR DE L'ÉNERGIE ÉLECTRIQUE ET SON PROCÉDÉ DE FONCTIONNEMENT

(30) Priority: 09.09.2021 IT 202100023276
(43) Date of publication of application: 17.07.2024
(73) Proprietor: R.I. S.p.A. Modular Building System, 73019 Trepuzzi (LE) (IT)
(72) Inventor: TAFURO, Cosimo, 73100 Lecce (LE) (IT)
(74) Representative: Longoni, Alessandra
(86) International application number: PCT/IB2022/058396
(87) International publication number: WO 2023/037255

(56) References cited:
- WO-A1-2018/209378
- US-A1- 2004 124 711
- US-A1- 2012 080 072
- US-A1- 2017 201 077
- US-A1- 2019 326 846
- US-A1- 2020 119 683

## Description

### Technical Field

The present invention relates, in general, to a containerized module configured to provide electricity production services.

In particular, the present invention relates to modules having the dimensions of an ISO standard container of 10, 20 or 40 feet (LxW 299x244, 606x244, 1220x244 cm respectively), for example modules according to ISO 668 edition 2020 standards to which hereinafter reference is made, designed to provide electricity production services by using photovoltaic panels.

### Background Art

Containerized modules configured to provide electricity production services are known and common on the market.

The known modules, in general, provide that the photovoltaic panels, suitable for supplying electrical energy, are comprised in the container during transport and that, in order to be used, they are exposed to sunlight.

According to a first type of known art, it is generally provided that the panels, when in use, are physically a total part of the container so that the panels cannot be separated from the container.

According to a second type of known art, it is also provided that the containerized module is simply used to transport, in an optimized way, the panels suitable for supplying electrical energy.

According to this second type of prior art, it is provided that the panels can be transported, unloaded and placed at a distance from the container so that they can be used by way of equipment comprised in further containers or in suitably arranged fixed positions.

WO 2018/209 378 discloses a portable power station configured to provide power, contained within a standard-length shipping container and comprising a housing, having a base wall, side walls, end walls and a top wall. The housing is a standard size shipping container having container corners. The portable power station comprises a solar array which comprises four generally horizontal panel structures, which are movable between a stowed position within the upper internal space and an extended (in use) position. In the stowed position, the panel structures are arranged in a stacked manner under the top wall and can be enclosed within the housing via the upper sections. In the extended position, each panel structure extends outwardly out of the housing, in a respective lateral direction.

US 2017/0 201 077 discloses a containerized microgrid, comprising a sturdy weatherproof housing, configured for easy shipping and transport, an inverter for managing renewable and non-renewable energy sources, a battery cabinet with batteries and battery management system, a solar panel storage rack with solar panels and solar panel combiner box, a communication system with satellite and terrestrial radio communications systems, a generator, a security system to protect the containerized microgrid and an optional water purification system.

US 2019/0 326 846 discloses a transportable, deployable utility system, comprising a housing including a frame and mounting a subframe. Solar panels, wind turbine(s), fuel cells, fuel reformers, and other energy sources can be placed in and mounted on the housing. A photovoltaic solar panel array is mounted on the housing for movement between a retracted, storage position and an extended, use position. The housing frame and subframe include tubular members which can be releasably interconnected by clamping connectors.

According to US 2012/0 080 072, electrical power is generated from solar and wind sources, thus reducing the need for fuel oil at military forward operating bases and main operating bases. A wind turbine and a solar cell panel are connected to a battery bank. Both the turbine and the solar cells are stored in two standard military shipping containers. When transported to the desired location, these sub-systems are easily set up for operation. The entire apparatus may be disassembled for re-transport and use at another location. Necessary container modifications to connect the system for use are made in such a way as not to alter the container's outside envelope, thus enabling normal transport of the container without damage to the modifications. Each of the solar cells have discs attached so that the solar panel can be assembled in the field by sliding each disc into a mounting channel. This disc and channel structure also allows each cell to be stored in the shipping container by using similar channels mounted back to back in a storage frame located in one of the containers. The solar panel is pivotally mounted in proximity to an edge of the shipping container using mounting elements which interfit with the already provided lift fittings on the container. A wiring harness plugs each solar cell to a conduit for connection to the battery charging system.

US 2004/0 124 711 discloses a mobile power system for producing power at a desired location, which includes a first power generating device of a first type coupled to a transportable housing, and a second power generating device of a second type coupled to the transportable housing. The mobile power system may provide easy access to different types of power outputs. Further, the housing may have the approximate size of a standard freight container.

Finally, US 2020/0 119 683 discloses a renewable-energy electrical generation and distribution system including a container. At least one power source is sized to be retained within the container and deployable therefrom, the at least one power source being configured to generate energy from renewable resources. A battery is disposed within the container and in communication with the at least one power source. A power distribution system is disposed within the container and in communication with the battery and the at least one power source, the power distribution system including: at least one switch and at least one interface connected to the at least one switch and disposed external to the container, the at least one switch configured selectively turn on and off power distribution to the at least one interface based on at least one predetermined parameter.

In general, Applicant has noted that the first type of prior art cannot disregard the positioning of the container and that the second type cannot disregard further apparatuses in order to effectively use the panels.

In particular, Applicant has noted that both the first type and the second type of prior art are not able to meet the need, anyway present in the market, of electricity production services integrated, easily transportable, placeable and usable in a total, partial and/or distributed way, without the need for the panels to physically constitute a total part of the container or require the support of external apparatuses.

### Disclosure of the Invention

The invention is defined by the attached claims.

Object of the present invention is to solve the technical problems highlighted above.

According to the present invention, this object is achieved by way of a containerized module configured for providing electricity production services comprising the features disclosed in the following claims.

The present invention also relates to an operation method of the containerized module configured for providing electricity production services.

The claims as well as the description and figures are a total part of the technical teaching provided herein about the invention.

The following summary of the invention is provided in order to provide a basic understanding of some aspects and features of the invention.

This summary is not an extensive overview of the invention, and as such it is not intended to particularly identify key or critical elements of the invention, or to delineate the scope of the invention. Its sole object is to present some concepts of the invention in a simplified form as a prelude to the more detailed description that is presented below.

A containerized module according to the invention comprises
- a container (11) configured to be transported by way of a transportation means, said container (11) internally comprising a compartment (12) comprising a plurality of panel groups (21), wherein
- said container (11) comprises fastening devices and internally comprises a further compartment (14) comprising devices for managing, in use, said panel groups (21), and wherein each of said panel groups comprises
- a substantially rectangular base (23) comprising, at the vertices of said base, corner nodes (25) of extractable type, comprising extractable elements (51) and hooking components (55), wherein said extractable elements (51) are configured to slide inside said base (23) and come out, in a controlled manner, from the base (23), and comprise a first end, comprised in the base (23) and constrained to the base (23), and a second end, distal to the first end, and wherein said hooking components (55) are positioned at said distal end of said extractable elements and configured to hook, in use, said fastening devices,
- a set of panels (22), adjacently placed, hinged to one side of said base and configured to supply electrical energy from a renewable source.

A method of operation of a containerized module is also part of the present invention.

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1a, 1b, 1c, 1d show overall axonometric views of an example of a containerized module according to the present disclosure;
Figs. 2a, 2b, 2c show a first example of fastening method, in use, of a panel group comprised in the containerized module;
Fig. 3 shows a second example of fastening method, in use, of a panel group comprised in the containerized module;
Fig. 3a, 3b, 3c show construction details of the fastening method shown in Fig. 3;
Fig. 4a, 4b schematically show an example of electrical connections provided in the containerized module according to the present disclosure;
Fig. 5a, 5b, 5c schematically show plan views examples related to the use of space inside the containerized module according to the present disclosure; and
Fig. 6 schematically shows an example of a plant which can be implemented by way of the containerized module according to the present disclosure.

In the present description it is provided that drawings are not necessarily to scale and that terms such as: upper, lower, longitudinal, orthogonal, lateral, above, below, etc. are used in their conventional meaning unless otherwise stated.

### Best Modes for Carrying Out the Invention

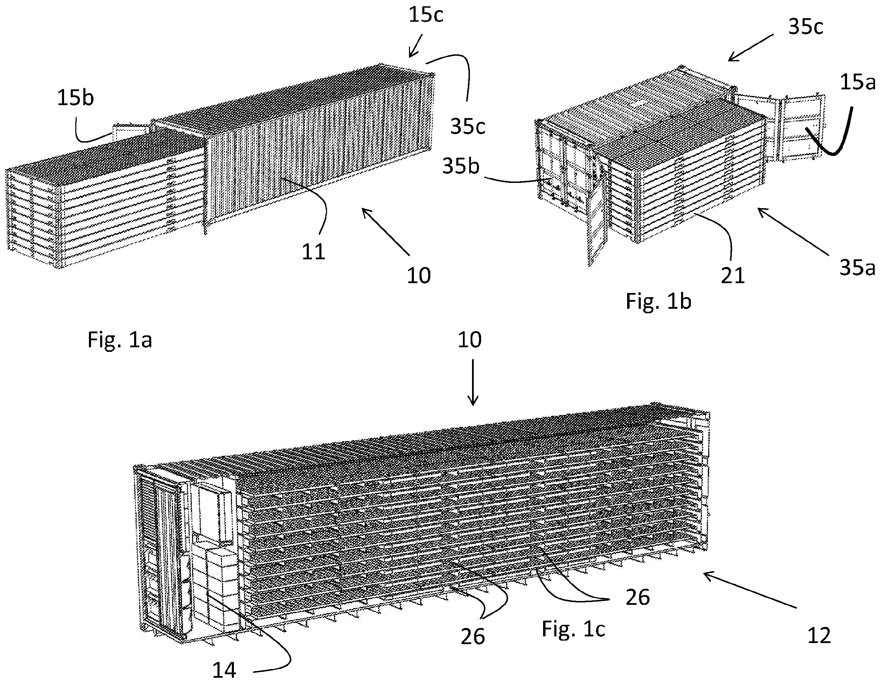

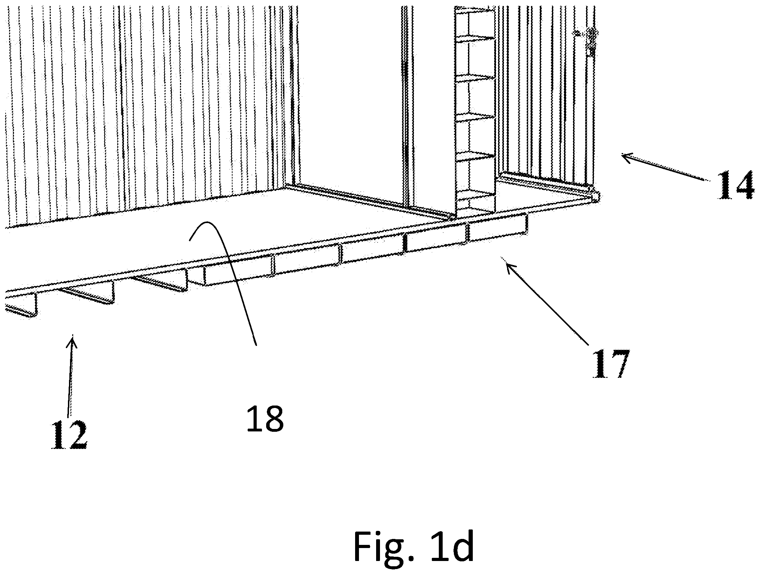

With reference to Figures 1a, 1b, 1c, 1d a containerized module 10, according to the present embodiment, comprises a container 11, preferably an ISO standard container, internally comprising at least one compartment for containing panels 12, hereinafter referred to as the first compartment, and a compartment for containing control devices 14, hereinafter referred to as the second compartment.

The container 11, for example a 40 feet (1220x244 cm) ISO standard type or, alternatively, a 20 feet (606x244 cm) ISO standard type or a 10 feet (299x244 cm) ISO standard type is configured to be transported, in a known way, by transport means and comprises a larger access opening 15a, preferably used for loading/unloading, on the larger lateral side 35a and two smaller openings, 15b and 15c, on the smaller lateral sides, 35b 35c, known per se.

The first compartment 12 is configured to contain one or more (for example 8 to 12) panel groups 21, for example groups with photovoltaic panels, each panel group stacked on top of each other.

In the continuation of the description, the panel groups are hereinafter referred to as Power Rack 21, for simplicity of description.

The second compartment 14, for example with dimensions in length "L" not less than 15 cm, comprises devices configured to manage the Power Racks 21, when in use.

According to the preferred embodiment, the Power Racks 21 can be inserted and extracted both from the larger access opening 15a and from one of the two smaller access openings, 15b or 15c, both individually and as a stacked set.

In particular, in order to facilitate the insertion and extraction of the Power Racks, it is preferably provided that the Power Racks 21 comprise, in correspondence with their lower area, elongated fork pitch cavities 26 configured to allow handling of the Power Racks individually or stacked, for example by way of handling means of known type, such as by way of forklifts equipped with forks, known per se. As easily understandable by a person skilled in the art, the second compartment 14 is accessible through the smaller access opening, 15b or 15c, facing, by construction, the second compartment.

According to the preferred embodiment, the second compartment 14 comprises at least one inverter 14a, an electrical distribution panel 14b, an electrical input panel 14c1 and an electrical output panel 14c2.

According to further embodiments, the second compartment can also comprise, for example, an air conditioning device and/or an electrical back-up generator.

According to the preferred embodiment, a battery set 17, located at the base of the container 11, for instance integrated in the floor 18 thereof, is configured to store the electrical energy supplied, in use, by the Power Racks 21 and transmitted therefrom to the inverter 14a.

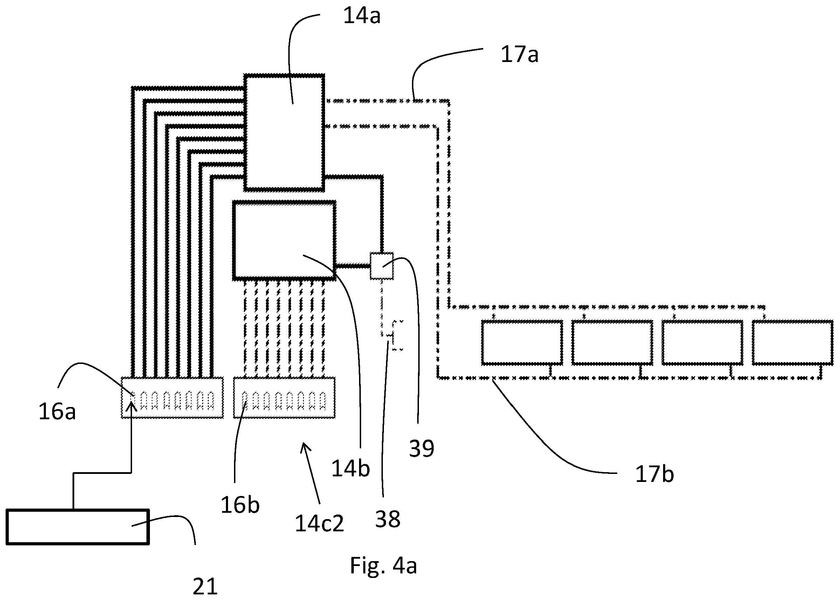

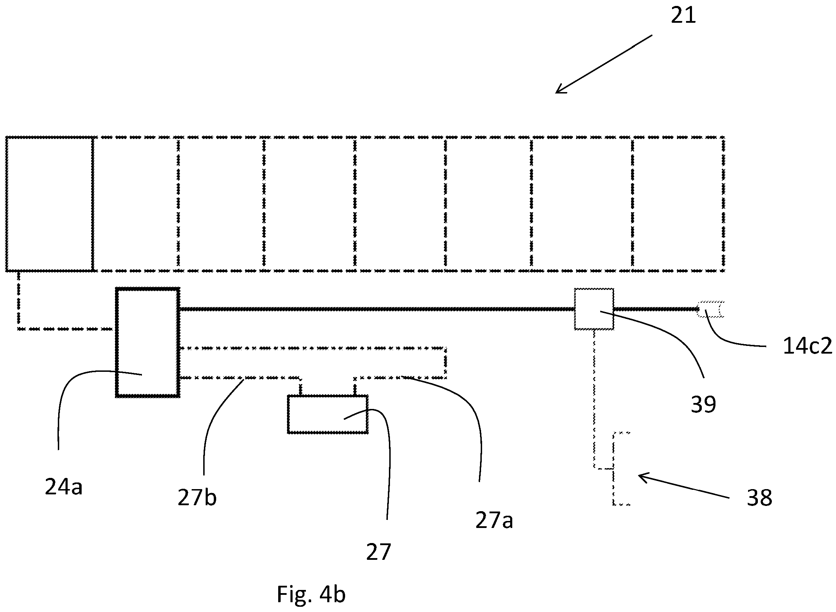

In particular, it is provided that, in use, the Power Racks 21 are positioned outside the container 11, that they are connected to the electrical input panel 14c1 (Fig. 4) and that this panel 14c1 is connected, in a known way, to the inverter 14a. For example, the electrical input panel 14c1 comprises first connectors 16a, for example fixed bipolar wall connectors of 500 V DC to 10 A type, connected, in use, to the respective Power Racks 21.

According to the preferred embodiment, it is also provided that the inverter 14a is connected to the electrical distribution panel 14b and that this distribution panel 14b is connected to the electrical output panel 14c2.

The electrical output panel 14c2 comprises second connectors 16b, for example fixed wall sockets of 230 V AC to 16 A type or sockets of pertinent type and suitable voltage and current intensity, as easily understandable by a person skilled in the art, which can be connected to one or more electrical users or utilities by way of known external connections.

The general wiring diagram provides that the battery set 17 is connected by way of input/output connections, 17a and 17b, to the inverter 14a so as to allow both the Power Racks 21 to supply electricity to the batteries and the inverter 14a to collect the electrical energy accumulated by the batteries 17 and transmit it to the electrical output panel 14c2 and from this to the second connectors 16b.

According to a variant of the general wiring diagram, it is provided that each Power Rack 21 comprise an inverter 24a and one or more batteries 27, integrated in the power Rack, for example in its base 23, and configured to accumulate the electrical energy generated by the respective Power Rack 21.

According to this variant, each Power Rack 21 can operate independently and autonomously as to the devices comprised in the second compartment 14 and to the batteries 17 integrated, for instance, in the floor 18 of the container.

In any case, in all the embodiments it is provided that the container 11 comprises both the first compartment 12 and the second compartment 14 and that, according to a further variant, the inverter 24a and the batteries 27 of the Power Rack 21 can be connected, in a known way, to the inverter 14a and to the batteries 17 comprised in the second compartment 14 and/or integrated, for instance, in the floor of the container 11, respectively.

According to further variants provided in all the embodiments, it is provided that the wiring diagram also comprises a plurality of sensors 38 connected to the electrical distribution panel 14b by way of a distribution box 39.

According to the preferred embodiment, each Power Rack 21 comprises a set of photovoltaic panels 22, for example one or more solar panels Model JKM340M of the Jinco Solar Company, placed adjacent each-other and a base 23, comprising a substantially rectangular shape, made with materials such as high insulating power, at least of the thermal type, such as for example materials of a known type suitable for operating in a range of applications comprised between +50 °C and -50 °C.

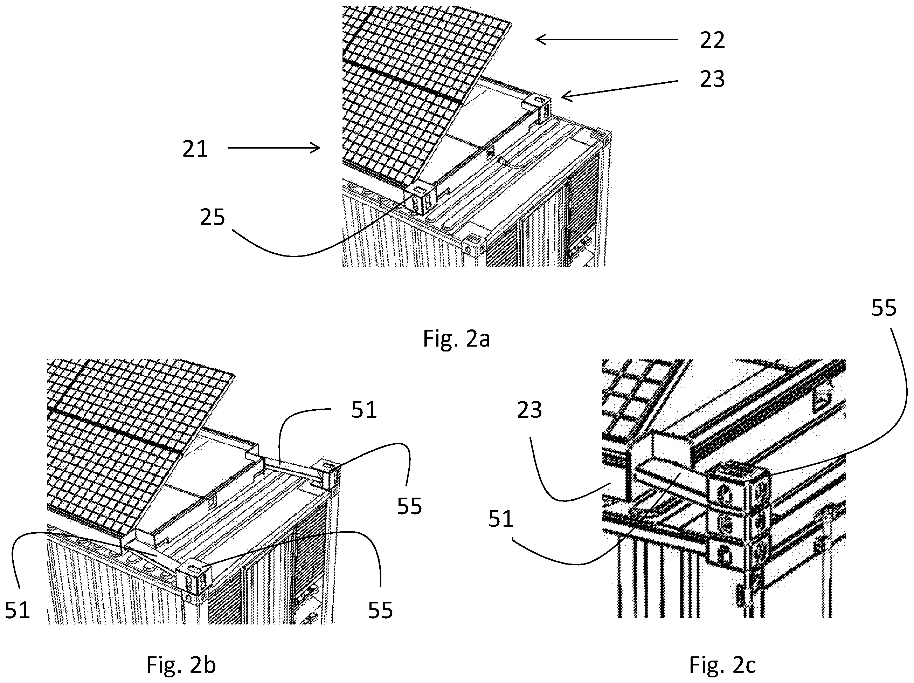

Preferably, the set of panels 22 (Fig. 2a, 2b, 2c) of each Power Rack 21 are hinged to one of the two long sides of the base 23 so that it is possible to orient the set of photovoltaic panels 22 with a desired inclination angle as to the base 23.

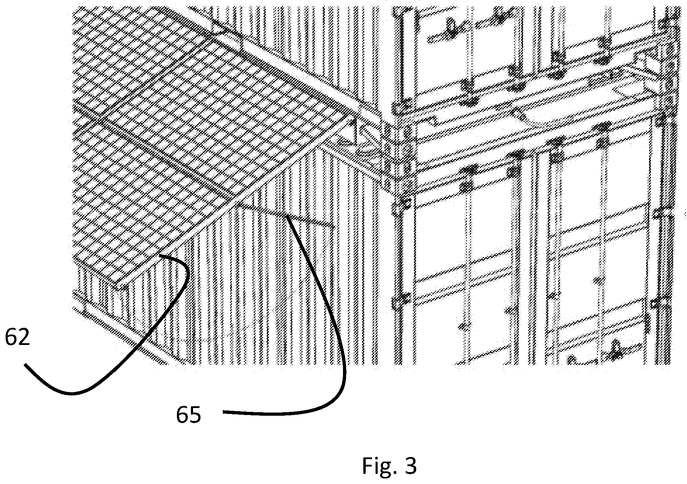

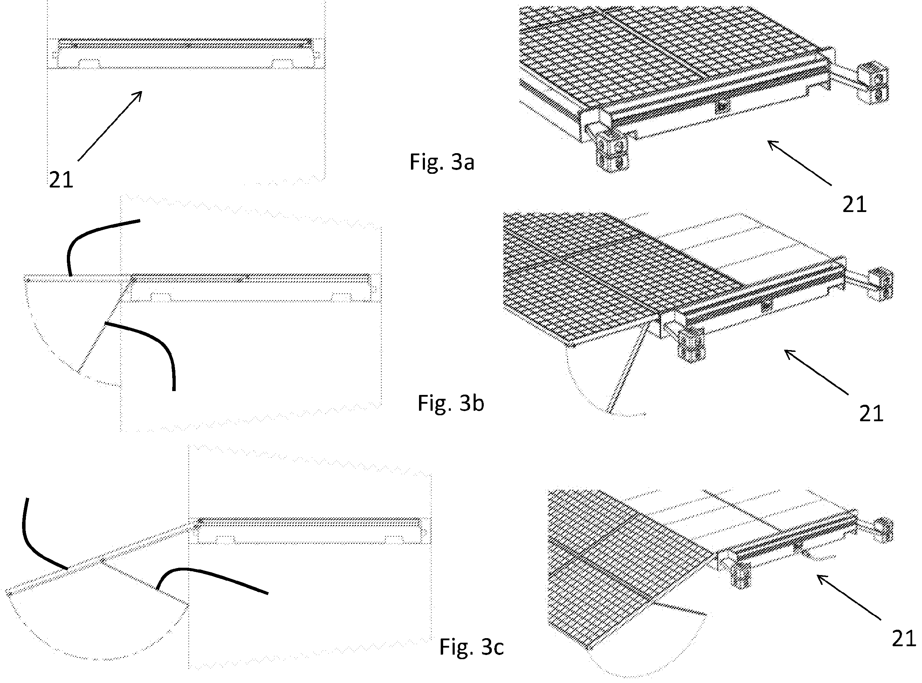

Even more preferably, the set of panels 22 (Figg. 3, 3a-3c) of each Power Rack 21 is hinged so that it can also slide on suitable fixed guides 63 comprised in the base 23, so as to protrude from the base 23 and can be positioned inclined, for example, along the larger lateral side 35a of the container 11.

In particular, it is provided that the set of panels 22 comprises at the lateral ends movable guides 62 supporting the set of panels, configured to slide on the fixed guides 63, and foldable rods 65, hinged to the movable guides, and provided to support the set of panels 22 on the larger lateral side 35a of the container 11.

According to the preferred embodiment, the flat dimensions of the Power Rack 21, when not in use, are determined by the substantially rectangular base 23 whose length is expected to be less than the length of the first compartment 12.

Furthermore, according to the present invention, it is also provided that the base 23, at the vertices of the base 23, comprises corner nodes 25 of extractable type, configured to be extracted, in use, from the base and to be fixed to ground or to respective fastening devices for example fastening devices of twist-lock type, provided, for example, in a known way, on the upper and lower surfaces of the containers.

Also according to the invention, the corner nodes 25 comprise extractable elements 51, for example of telescopic type, configured to slide inside the base 23 of the Power Rack 21 and come out from the base in a controlled manner. Further according to the invention, the extractable elements 51 of the corner nodes 25 comprise a first end, comprised in the base and constrained to the base 23, and a second end, distal to the first end, comprising hooking components 55, for example vertically elongated, configured to be securely hooked to the fastening devices provided in corner points, for example, of the upper and/or lower surface of the containers 11.

Applicant has experimentally verified that, by providing for the possibility of securely fastening, for example, respective Power Racks 21 on the upper surface of respective containers 11, it is possible to supply electrical energy to container vehicles, such as container ships, in safe way, even in case of unfavorable conditions, such as unfavorable sea conditions.

Below it is reported a table (Table 1) which shows indicative values of Power Rack 21 dimensions with the corner nodes 25 retracted and with the corner nodes extended or, in other words, extracted.

**TAB. 1**

| Type | Container LxW (cm) | Base length with retracted corner nodes LxW (cm) | Base length with extracted corner nodes LxW (cm) |
|---|---|---|---|
| 10 ft | 299x244 | 230x225 | 299x244 |
| 20 ft | 606x244 | 460x225 | 606x244 |
| 40 ft | 1220x244 | 1150x225 | 1220x244 |

The dimensions of the Power Racks 21 with the corner nodes 25 retracted are, in length and width, configured so as to allow the Power Racks 21 to be contained within the first compartment 12. In use, the corner nodes are configured so as to reach dimensions, in length and width, suitable to be able to hook, with the second ends 53, the fastening devices comprised in the container 11.

The containerized module 10 as described is aimed at providing services for the production, accumulation, conservation, transformation and distribution of electricity generated by way of a renewable source, in particular by way of a photovoltaic source, but also, as easily understandable by a person skilled in the art, by way of a wind type or thermal solar type source.

Therefore, although in this description the use of photovoltaic panels has been mainly suggested, it is not excluded that the present disclosure may use, by way of appropriate adaptations, panels equipped with devices suitable for managing the renewable energy of wind type or thermal solar type sources.

In particular, according to the present embodiment it is envisaged that the containerized module 10, in case of the 40-foot module, can be configured to provide the above services with powers not lower than 40 KW/h, through the use, for example, of a predefined number, for example a number between 8 and 12, of Power Racks 21, stored, when not in use, inside the first compartment 12, during transport/handling, and located, when in use, on the ground or on the roofs of houses or on the upper surface of respective containers.

Preferably each Power Rack 21 is connected to inverters 14a installed inside the second compartment 14 which are connected in turn to rechargeable batteries 17 installed at the base of the container 11, for instance integrated in the floor of the container 11.

According to the variant suggested above, it is also envisaged that each Power Rack 21 comprises a Power Rack inverter 24a and one or more rechargeable batteries 27 and that it can be used stand-alone or combined with buildings for civil and/or industrial use such as offices, housing, canteen rooms, recreation rooms, etc. so as to supply electrical energy to electrical users or utilities and to reduce the CO₂ emissions generated by them.

The operation of the containerized module 10 described up to now provides that in a preliminary phase the container 11 is loaded into the first compartment 12 with a certain number of Power Racks 21, according to requirements, and is transported, for example, to a location where the installation and use of the Power Racks is foreseen.

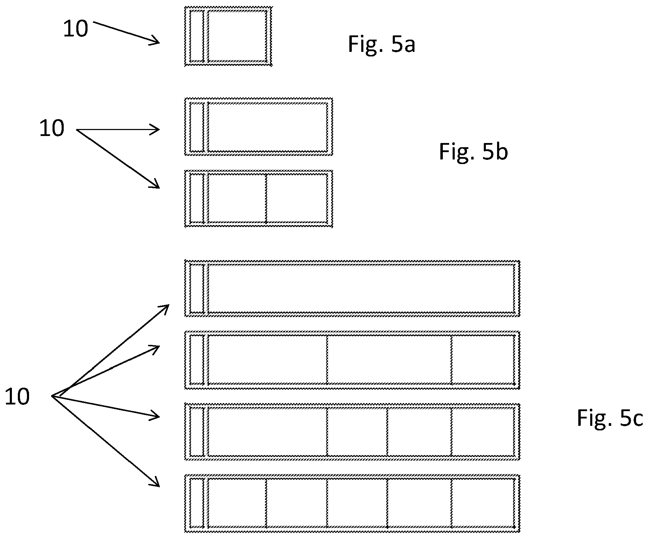

Preferably, it is provided that the Power Racks 21 are of modular size so that they can be loaded into containers 11 of various sizes according to combinations of variable type as shown in Figures 5a, 5b and 5c.

For example, in case of a 10-feet (299 cm) container, a set of 8 to 12 Power Racks of a single type is expected to be loaded (Fig. 5a), for example with dimensions of 230x225 cm with retracted corner nodes.

For example, in the case of 20-feet (606 cm) containers, a set of 8 to 12 Power Racks of dimensions 460x225 cm with retracted corner nodes (Fig. 5b) or a set of panels of the type shown in Fig. 5a or even a combination thereof.

For example, in the case of 40-feet (1220 cm) containers, a set of 8 to 12 solar panel groups of 1150x225 cm or a set of solar panels of the type shown in Fig. 5a or in Fig. 5b or even a combination thereof.

During transportation, the Power Rack 21 is expected to have the photovoltaic panels 22 lowered (knocked down, hidden, locked up) and the extractable corner nodes 25 retracted, such as to comprise the Power Rack 21 in the perimeter of a regular rectangular shape whose dimensions are suitable for operations of loading on or unloading from the first compartment 12, or on/from the loading surface of the container 11.

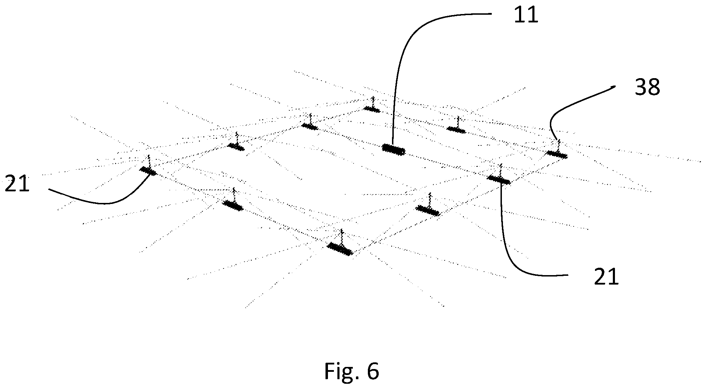

After unloading Power Racks 21 are positioned, for instance, on the ground according, for example, to a system diagram 30 as shown in Fig. 6.

The diagram can be, for example, a coverage perimeter in which each Power Rack 21 is connected to the devices, 14a-14e, comprised in the second compartment 14 by way of cables 28 and by way of control connections 29, for example wireless control connections.

For example, in case of wireless control connections, the Power Racks comprise known types of video surveillance devices.

During the positioning and connection phase, it is also envisaged that the Power Racks are oriented appropriately, that the photovoltaic panels are raised according to predetermined angles and that the extractable nodes are extracted and fixed, for example, to the ground.

At the end of the positioning, connection and fixing phase, in a subsequent phase the containerized module 10 is activated.

Preferably, activation can be carried out remotely by way of devices connected via cable or radio comprised, for example, in the second compartment 14 and combined with sensors 38, such as signal and measurement transducers, comprised in the Power Racks.

After the activation, it is provided that users or utilities are connected by way of the connectors 16b.

As easily understandable by a person skilled in the art, utilities can be, for example:
- charging columns for motor vehicles, caravans, campers, etc.;
- different types of houses, including prefabricated ones;
- other types of civil or industrial users or utilities.

According to a further operation mode, for example, the Power Racks 21 of the containerized module 10, after transport, are unloaded and positioned and fixed by way of the extractable nodes 25 on the upper surface of various containers comprised, for instance, in a container vehicle or ship.

According to yet another operation mode, the photovoltaic panels of the Power Racks are made to slide on the side guides comprised in the base 23, so as to come out from the base and can be positioned inclined, for example, along the larger lateral side 35a of the container 11. This solution is convenient if the Power Racks of the containerized module 10 are positioned among stacked containers.

In these last two operating modes it is envisaged that the Power Racks 21 are used to supply electrical power services by way of the connectors 16b to the utilities of the container vehicle or ship.

## Claims

1. A containerized module comprising
- a container (11) configured to be transported by a transportation means, said container (11) internally comprising a compartment (12) comprising a plurality of panel groups (21), wherein
- said container (11) comprises fastening devices and internally comprises a further compartment (14) comprising devices for managing, in use, said panel groups (21), and wherein each of said panel groups comprises
- a substantially rectangular base (23) comprising, at the vertices of said base, corner nodes (25) of extractable type, being configured to be fixed to the ground or to fastening devices, wherein said corner nodes comprise extractable elements (51) and hooking components (55), wherein said extractable elements (51) are configured to slide inside said base (23) and come out, in a controlled manner, from the base (23), and comprise a first end, comprised in the base (23) and constrained to the base (23), and a second end, distal to the first end, and wherein said hooking components (55) are positioned at said distal end of said extractable elements (51) and configured to hook, in use, said fastening devices,
- a set of panels (22), adjacently placed, hinged to one side of said base and configured to supply electrical energy from a renewable source.

2. The module according to claim 1, wherein
- said base (23) comprises
- fixed guides (63), and
- said panels (22) comprise at lateral ends
- movable guides (62) configured to support the panels and configured to slide on the fixed guides (63) of the base (23) so that the panels (22) are configured to laterally protrude from the base and to be positioned on a lateral face of said container.

3. The module according to claim 2, wherein said panels also comprise foldable rods at the lateral ends (65), said foldable rods being hinged to the movable guides (62) and configured to rest, in use, on the lateral face of said container.

4. The module according to any one of claims 1 to 3, wherein
- said container (11) comprises, installed at its base and integrated into the container floor, a plurality of rechargeable batteries (17), and
- said further compartment (14) comprises an inverter (14a) connected by way of bidirectional connections (17a, 17b) to said rechargeable batteries (17), said inverter being connected, in use, to said panel groups (21) so as to charge said rechargeable batteries with electricity.

5. The module according to any one of claims 1 to 4, wherein
- said panel groups (21) also comprise
- at least one rechargeable battery (27), and
- an inverter (24a) connected by way of bidirectional connections (27a, 27b) to said at least one rechargeable battery (27) and configured to supply electrical energy to electrical users or utilities.

6. An operation method of a containerized module (10) according to any of the preceding claims, comprising a container (11) internally comprising a first compartment (12) comprising a plurality of panel groups (21), and a second compartment (14) comprising devices for managing, in use, said panel groups (21), said method comprising the steps of:
- unloading the panel groups (21) from the container (11), each of said panel groups comprising a base (23) and a set of panels (22) adjacently placed,
- positioning the panel groups in such a way as to orient the set of panels (22) according to the type of renewable source provided,
- fixing the base of each of said panel groups (21) to the ground or to fastening devices comprised on said container by way of corner nodes (25) of extractable type, including sliding elements (51) and hooking components (55), positioned at a distal end of said sliding elements (51),
- connecting said panel groups (21) to said devices comprised in said second compartment of the container,
- activating the supply of electrical energy from the provided renewable source by way of said sets of panels (22).

7. The operation method according to claim 6, wherein a step of connecting the devices comprised in said second compartment to electrical users or utilities is also provided.

8. The operation method according to claim 7, wherein a step of accumulating electricity in rechargeable batteries (17, 27) integrated in the floor of the container and/or in said panel groups (21) is also provided.

## Patentansprüche

1. Containermodul, umfassend
- einen Container (11), der konfiguriert ist, durch ein Transportmittel transportiert zu werden, wobei der Container (11) intern ein Fach (12) umfasst, das eine Vielzahl von Plattengruppen (21) umfasst,
wobei
- der Container (11) Befestigungsvorrichtungen umfasst und intern ein ferneres Fach (14) umfasst, umfassend Vorrichtungen zum Verwalten der Plattengruppen (21) in Verwendung, und wobei jede der Plattengruppen Folgendes umfasst
- eine im Wesentlichen rechteckige Basis (23), umfassend an den Scheitelpunkten der Basis Eckknoten (25) vom extrahierbaren Typ,
wobei sie konfiguriert sind, dass sie am Boden oder an Befestigungsvorrichtungen befestigt werden können, wobei die Eckknoten ausziehbare Elemente (51) und Einhängekomponenten (55) umfassen, wobei die ausziehbaren Elemente (51) konfiguriert sind, um innerhalb der Basis (23) zu gleiten und in einer kontrollierten Art aus der Basis (23) herauszukommen, und ein erstes Ende, das in der Basis (23) umfasst ist und an der Basis (23) festgehalten wird, und ein zweites Ende umfassen, das distal zum ersten Ende ist, und wobei die Einhängekomponenten (55) am distalen Ende der ausziehbaren Elemente (51) positioniert sind und konfiguriert sind, um im Gebrauch die Befestigungsvorrichtungen einzuhaken,
- einen Satz von Platten (22), die nebeneinander platziert sind, an einer Seite der Basis angelenkt und konfiguriert sind, elektrische Energie aus einer erneuerbaren Quelle zuzuführen.

2. Modul gemäß Anspruch 1 , wobei
- die Basis (23) Folgendes umfasst
- feste Führungen (63) und
- die Platten (22) an seitlichen Enden Folgendes umfassen
- bewegliche Führungen (62), die konfiguriert sind, die Platten zu tragen, und konfiguriert sind, auf den festen Führungen (63) der Basis (23) zu gleiten, so dass die Platten (22) dazu konfiguriert sind, seitlich von der Basis vorzustehen und auf einer Seitenfläche des Containers positioniert zu werden.

3. Modul gemäß Anspruch 2,
wobei die Platten auch faltbare Stangen an den seitlichen Enden (65) umfassen, wobei die faltbaren Stangen an den beweglichen Führungen (62) angelenkt sind und konfiguriert sind, um in Verwendung auf der Seitenfläche des Containers aufzuliegen.

4. Modul gemäß einem der Ansprüche 1 bis 3,
wobei
- der Container (11) eine Vielzahl von wiederaufladbaren Batterien (17) umfasst, die an seiner Basis installiert und in den Containerboden integriert sind, und
- das fernere Fach (14) einen Wechselrichter (14a) umfasst, der mithilfe von bidirektionalen Verbindungen (17a, 17b) mit den wiederaufladbaren Batterien (17) verbunden ist, wobei der Wechselrichter in Verwendung mit den Plattengruppen (21) verbunden ist, um die wiederaufladbaren Batterien mit Elektrizität aufzuladen.

5. Modul gemäß einem der Ansprüche 1 bis 4,
wobei
- die Plattengruppen (21) auch Folgendes umfassen
- zumindest eine wiederaufladbare Batterie (27) und
- einen Wechselrichter (24a), der mithilfe von bidirektionalen Verbindungen (27a, 27b) mit der zumindest einen wiederaufladbaren Batterie (27) verbunden ist und konfiguriert ist, elektrischen Verbrauchern oder Versorgungsunternehmen elektrische Energie zuzuführen.

6. Betriebsverfahren eines Containermoduls (10) gemäß einem der vorhergehenden Ansprüche, umfassend einen Container (11), der intern ein erstes Fach (12) umfasst, umfassend eine Vielzahl von Plattengruppen (21), und ein zweites Fach (14), umfassend Vorrichtungen zum Verwalten der Plattengruppen (21) in Verwendung, das Verfahren die folgenden Schritte umfassend:
- Entladen der Plattengruppen (21) aus dem Container (11), jede der Plattengruppen eine Basis (23) und einen Satz von nebeneinander angeordneten Platten (22) umfassend,
- Positionieren der Plattengruppen auf eine solche Weise, dass der Satz von Platten (22) gemäß des Typs der bereitgestellten erneuerbaren Quelle ausgerichtet wird,
- Befestigen der Basis jeder der Plattengruppen (21) am Boden oder an Befestigungsvorrichtungen, die am Container umfasst sind, mithilfe von Eckknoten (25) vom ausziehbaren Typ, einschließlich Gleitelementen (51) und Einhängekomponenten (55), die an einem distalen Ende der Gleitelemente (51) positioniert sind,
- Verbinden der Plattengruppen (21) mit den Vorrichtungen, die in dem zweiten Fach des Containers umfasst sind,
- Aktivieren der Zufuhr von elektrischer Energie aus der bereitgestellten erneuerbaren Quelle mithilfe von Sätze von Platten (22).

7. Betriebsverfahren gemäß Anspruch 6,
wobei ein Schritt des Verbindens der Vorrichtungen, die in dem zweiten Fach umfasst sind, mit elektrischen Verbrauchern oder Versorgungsunternehmen auch bereitgestellt ist.

8. Betriebsverfahren gemäß Anspruch 7,
wobei ein Schritt des Akkumulierens von Elektrizität in wiederaufladbaren Batterien (17, 27), die in den Boden des Containers und/oder in die Plattengruppen (21) integriert sind, auch bereitgestellt ist.

## Revendications

1. Module conteneurisé comprenant
- un conteneur (11) configuré pour être transporté par un moyen de transport, ledit conteneur (11) comprenant à l'intérieur un compartiment (12) comprenant une pluralité de groupes de panneaux (21),
dans lequel
- ledit conteneur (11) comprend des dispositifs de fixation et comprend à l'intérieur un autre compartiment (14) comprenant des dispositifs pour gérer, lors de l'utilisation, lesdits groupes de panneaux (21), et dans lequel chacun desdits groupes de panneaux comprend
- une base (23) sensiblement rectangulaire comprenant, aux sommets de ladite base, des nœuds de coin (25) de type extractible, étant configurés pour être fixés au sol ou à des dispositifs de fixation, dans lequel lesdits nœuds de coin comprennent des éléments extractibles (51) et des composants d'accrochage (55), dans lequel lesdits éléments extractibles (51) sont configurés pour coulisser à l'intérieur de ladite base (23) et sortir, de manière contrôlée, de la base (23), et comprennent une première extrémité, comprise dans la base (23) et contrainte à la base (23), et une seconde extrémité, distale par rapport à la première extrémité, et dans lequel lesdits composants d'accrochage (55) sont positionnés à ladite extrémité distale desdits éléments extractibles (51) et configurés pour accrocher, lors de l'utilisation, lesdits dispositifs de fixation,
- un ensemble de panneaux (22), placés de manière adjacente, articulés à un côté de ladite base et configurés pour fournir de l'énergie électrique à partir d'une source renouvelable.

2. Module selon la revendication 1, dans lequel :
- ladite base (23) comprend
- des guides fixes (63), et
- lesdits panneaux (22) comprennent aux extrémités latérales
- des guides mobiles (62) configurés pour supporter les panneaux et configurés pour coulisser sur les guides fixes (63) de la base (23) de sorte que les panneaux (22) sont configurés pour faire saillie latéralement de la base et pour être positionnés sur une face latérale dudit conteneur.

3. Module selon la revendication 2,
dans lequel lesdits panneaux comprennent également des tiges pliables aux extrémités latérales (65), lesdites tiges pliables étant articulées aux guides mobiles (62) et configurées pour reposer, lors de l'utilisation, sur la face latérale dudit conteneur.

4. Module selon l'une quelconque des revendications 1 à 3, dans lequel
- ledit conteneur (11) comprend, installé à sa base et intégré dans le plancher du conteneur, une pluralité de batteries rechargeables (17), et
- ledit autre compartiment (14) comprend un onduleur (14a) connecté par l'intermédiaire de connexions bidirectionnelles (17a, 17b) auxdites batteries rechargeables (17), ledit onduleur étant connecté, lors de l'utilisation, auxdits groupes de panneaux (21) de manière à charger lesdites batteries rechargeables avec de l'électricité.

5. Module selon l'une quelconque des revendications 1 à 4, dans lequel
- lesdits groupes de panneaux (21) comprennent également
- au moins une batterie rechargeable (27), et
- un onduleur (24a) connecté par l'intermédiaire de connexions bidirectionnelles (27a, 27b) à ladite au moins une batterie rechargeable (27) et configuré pour fournir de l'énergie électrique aux utilisateurs d'électricité ou aux services publics.

6. Procédé de fonctionnement d'un module conteneurisé (10) selon l'une quelconque des revendications précédentes, comprenant un conteneur (11) comprenant à l'intérieur un premier compartiment (12) comprenant une pluralité de groupes de panneaux (21), et un second compartiment (14) comprenant des dispositifs pour gérer, lors de l'utilisation, lesdits groupes de panneaux (21), ledit procédé comprenant les étapes de :
- décharge des groupes de panneaux (21) du conteneur (11), chacun desdits groupes de panneaux comprenant une base (23) et un ensemble de panneaux (22) placés de manière adjacente,
- positionnement des groupes de panneaux de manière à orienter l'ensemble des panneaux (22) en fonction du type de source renouvelable fournie,
- fixation de la base de chacun desdits groupes de panneaux (21) au sol ou à des dispositifs de fixation compris sur ledit conteneur par l'intermédiaire de nœuds de coin (25) de type extractible comprenant des éléments coulissants (51) et des composants d'accrochage (55), positionnés à une extrémité distale desdits éléments coulissants (51),
- connexion desdits groupes de panneaux (21) auxdits dispositifs compris dans ledit second compartiment du conteneur,
- activation de la fourniture d'énergie électrique à partir de la source renouvelable fournie au moyen desdits ensembles de panneaux (22).

7. Procédé de fonctionnement selon la revendication 6, dans lequel une étape de connexion des dispositifs compris dans ledit second compartiment aux utilisateurs d'électricité ou aux services publics est également prévue.

8. Procédé de fonctionnement selon la revendication 7, dans lequel une étape d'accumulation d'électricité dans des batteries rechargeables (17, 27) intégrées dans le plancher du conteneur et/ou dans lesdits groupes de panneaux (21) est également prévue.
